# EUROPÄISCHE PATENTSCHRIFT

(11) **EP 0 572 820 B1**
(45) Veröffentlichungstag und Bekanntmachung des Hinweises auf die Patenterteilung: **21.01.1998**
(21) Anmeldenummer: 93107604.6
(22) Anmeldetag: 11.05.1993
(51) Int. Cl.: E06B 9/174, E04F 10/06

(54) **Kupplungsvorrichtung für die Wickelwellen von Markisen i.dgl.**
Coupling arrangement for the rollers of awnings and similar
Mécanisme d'accouplement pour barres d'enroulages des stores et simiulaires

(30) Priorität: 04.06.1992 DE 9207594 U
(43) Veröffentlichungstag der Anmeldung: 08.12.1993
(73) Patentinhaber: WEINOR Dieter Weiermann GmbH & Co., D-50829 Köln (DE)
(72) Erfinder: Henssen, Barbara, W-5000 Köln 50 (DE)
(74) Vertreter: Vollbach, Hans, Dipl.-Ing.

(56) Entgegenhaltungen:
- EP-A- 0 301 666
- DE-A- 3 623 762
- FR-A- 2 407 328
- US-A- 3 298 197

## Beschreibung

Die Erfindung betrifft eine Kupplungsvorrichtung für die Wickelwellen von Markisen oder sonstigen flexiblen Abdeckelementen entsprechend der im Oberbegriff des Patentanspruchs 1 angegebenen Art.

Wellenkupplungen für die in Fluchtrichtung nebeneinander gelagerten Tuch- bzw. Wickelwellen von Markisen oder sonstigen flexiblen Abdeckelementen, wie Fensterstores, Sonnenblenden u.dgl., sind in verschiedenen Ausführungen bekannt. Beispielsweise offenbart das DE-U-84 26 846 eine Wellenkupplung mittels eines eine Zwischenwelle zwischen den benachbarten Wickelwellen bildenden Kupplungsbolzens, der die von einer Konsole gebildete feste Zwischenplatte durchgreift, dabei mittels zweier Kugellager in Drehbüchsen der Zwischenplatte gelagert ist und mit dem Einsatzstück der einen Wickelwelle dadurch drehfest verbunden ist, daß er mit seinem mehreckigen Bolzenquerschnitt in eine entsprechende mehreckige Lageröffnung am Einsatzstück dieser Wickelwelle eingreift. Die drehfeste Verbindung mit der anderen Wickelwelle erfolgt mit Hilfe eines am Kupplungsbolzen fest angeordneten Zahnrades, das in eine Innenverzahnung einer am Einsatzstück der anderen Wickelwelle angeordneten Öffnung eingreift und durch Schrauben im Zahneingriff gesichert wird. Diese Kupplungsvorrichtung ist nicht nur verhältnismäßig bauaufwendig, sondern hat auch den Nachteil, daß eine Justierung der gekoppelten Wickelwellen zueinander nur in Stufen möglich ist. Zur Justierung und Kantenausrichtung der Markisen od.dgl. muß nach Lösen der Feststellschrauben die betreffende Wickelwelle von Hand aus dem Zahneingriff am Zahnrad herausgehoben und in diesem angehobenen Zustand gegenüber der anderen Wickelwelle gedreht werden.

Bei einer anderen bekannten Kupplungsvorrichtung nach der DE-A-33 37 741 weist die z.B. an einer Fassade befestigte Zwischenwand zwei parallel angeordnete Lagergabeln auf, die jeweils ein durch eine Schraube gesichertes Kugellager aufnehmen, in dem ein Kupplungsbolzen gelagert ist. Die beiden Kupplungsbolzen weisen einen Vierkantquerschnitt auf und sind in einer axialen Vierkantöffnung am Einsatzstück der betreffenden Wickelwelle drehfest zu dieser angeordnet, während ihre beiden zwischen den Lagergabeln liegenden Bolzenköpfe mit Hilfe einer Einsteckverbindung drehfest und lösbar verbunden sind. Auch bei dieser verhältnismäßig bauaufwendigen Kupplungsvorrichtung ist eine Justierung der Markisen od.dgl. durch relative Drehbewegung ihrer Wickelwellen nur in Stufen möglich, wobei die eine Wickelwelle entkuppelt und von der Halterung an ihrer Lagergabel gelöst werden muß.

Bei einer anderen bekannten Wickelwellen-Kupplungsvorrichtung nach FR-A-240 73 28 erfolgt die drehschlüssige Kupplung der hohlen Wickelwellen über einen eine Zwischenwelle bildenden Lagerbolzen, der in einer Lagerbuchse in der festen Zwischenwand gelagert ist und an seinen beiden Enden feste Kupplungszapfen trägt, die in Kupplungsausnehmungen der an den Enden der benachbarten Wickelwellen angeordneten Einsatzstücke einfassen und im Eingriff in diese Kupplungsausnehmungen durch Schrauben, verschraubbare Riegelstücke oder federbelastete Riegelstücke gesichert werden. Um eine drehschlüssige Kupplung der beiden Wickelwellen zu erreichen, weisen die Kupplungszapfen des Lagerbolzens einen quadratischen Querschnitt auf, wobei die Kupplungsausnehmungen an den Einsatzstücken der Wickelwellen im Querschnitt entsprechend rechteckig ausgeführt sind, so daß auch hier eine formschlüssige Drehverbindung zwischen den Wickelwellen gegeben ist. Bei dieser Kupplungsvorrichtung ist eine gegenseitige Justierung der Wickelwellen in ihrer Drehrichtung zu exakten Kantenausrichtung der Markisen od.dgl. nicht möglich, ohne die eine Wickelwelle von ihrem Kupplungszapfen zu lösen und aus dem Eingriff mit diesem herauszuheben. Dabei ist aber auch nur eine stufenweise Justierung erreichbar.

Schließlich ist aus der EP-A-0 30 16 66 eine Wickelwellen-Kupplungsvorrichtung für Mehrfach-Markisen oder Sonnenstores u.dgl. bekannt, bei der die auf einer gemeinsamen Fluchtlinie zueinander angeordneten hohlen Wickelwellen an ihren einander zugewandten Enden feste Einsatzstücke aufweisen, die jeweils in einem Wälzlager an einer festen Zwischenwand gelagert sind und mit zueinander fluchtenden axialen Bolzenbohrungen versehen sind, die einen hierin axial verschieblichen Kupplungsbolzen aufnehmen. Auch hier ist der Kupplungsbolzen zur drehschlüssigen Verbindung der beiden Wickelwellen unrund, d.h. im Querschnitt quadratisch ausgeführt und es sind entsprechend die Kupplungsbohrungen der Einsatzstücke im Querschnitt quadratisch ausgebildet. Um die Kupplung zu lösen, ist der Kupplungsbolzen mittels eines von außen her betätigbaren Drehantriebs mit angetriebenem Ritzel in Axialrichtung vollständig in die Kupplungsbohrung an dem einen Einsatzstück zurückschiebbar. Eine Justierung der Markisen od.dgl. durch relative Drehbewegung der beiden Wickelwellen ist auch hier nur in Stufen möglich.

Ausgehend von der Wickelwellen-Kupplungsvorrichtung der im Oberbegriff des Patentanspruchs 1 angegebenen Art liegt der Erfindung die Aufgabe zugrunde, diese Kupplungsvorrichtung bei vergleichsweise einfacher Ausgestaltung so auszubilden, daß zur Kantenausrichtung der Markisen od.dgl. eine stufenlose Justierung der Wickelwellen durch relative Drehbewegung zueinander unter Spannung ohne umständliche Manipulationen möglich ist.

Diese Aufgabe wird erfindungsgemäß mit den im Kennzeichen des Patentanspruchs 1 angegebenen Merkmalen gelöst.

Bei der erfindungsgemäßen Wickelwellen-Kupplungsvorrichtung sind die Wickelwellen an ihren einander zugewandten Wellenenden und den hier angeordneten Einsatzstücken über einen einzelnen Lagerbolzen gekuppelt, der in der zwischen den benachbarten Wickelwellen fest angeordneten Zwischenplatte od.dgl. in einem Bolzenlager drehbar gelagert ist und der einerseits die beiden Wickelwellen in ihrer Einbaulage hält und andererseits Bestandteil der Wellenkupplung ist und die beiden Wickelwellen bei geschlossener Klemmverbindung drehfest verbindet. Der Lagerbolzen dient also zugleich zur Lagerung und drehbaren Abstützung der gekoppelten Wickelwellen in ihrer Einbaulage, die sich dabei über den Lagerbolzen gegen die Zwischenplatte abstützen, die Bestandteil eines Gehäusekastens sein kann. Wesentlich ist dabei, daß der Lagerbolzen an seiner Einspannstelle für die Klemmverbindung zylindrisch ausgeführt und die Klemmverbindung als mehrteilige Schalen-Klemmverbindung ausgebildet ist, deren Lagerschalen mittels mindestens eines Klemmorgans, wie insbesondere einer Klemmschraube, den zylindrischen Einspannbereich des Lagerbolzens umgreifen und mit Reibschluß einspannen. Mit Hilfe dieser Klemmverbindung ist eine stufenlose Verstellung der Wickelwellen in ihre Drehrichtung relativ zueinander im Spannzustand der Markisen od.dgl. mit Hilfe des zugeordneten Markisenantriebs oder auch von Hand möglich. Hierzu bedarf es lediglich eines Lösens der Klemmverbindung, so daß die eine Wickelwelle relativ zu der anderen Wickelwelle gedreht werden kann, um eine genaue Kantenausrichtung der Markisen od.dgl. vorzunehmen, ohne daß hierzu die betreffende Wickelwelle aus ihrer Einbaulage vom Lagerbolzen abgehoben zu werden braucht. Demgemäß ist bei einem einfachen Gesamtaufbau der Wickelwellenlagerung und der hierzu verwendeten Kupplungsvorrichtung ein müheloses stufenloses Justieren der Wickelwellen zur Kantenausrichtung der Markisen od.dgl. erreichbar. Im Bereich der genannten Klemmverbindung ist die hohle Wikkelwelle mit einer oder auch mit mehreren Manteldurchbrechungen versehen, um das oder die Klemmorgane bzw. Klemmschrauben der Klemmverbindung mit Hilfe eines Werkzeugs von außen betätigen zu können. Es empfiehlt sich im übrigen, zur Erhöhung der Klemmwirkung der Klemmverbindung eine Aufrauhung oder Rändelung der zylindrischen Bolzenfläche des Lagerbolzens vorzusehen.

In bevorzugter Ausführung ist die vorgenannten Klemmverbindung von zwei den Lagerbolzen zwischen sich aufnehmenden und einspannenden Lagerhalbschalen gebildet, wobei die eine Lagerhalbschale zweckmäßig einstückig fest mit dem Einsatzstück der betreffenden Wickelwelle verbunden ist. Die beiden Lagerhalbschalen können mit fluchtenden Bohrungen für zu beiden Seiten des Lagerbolzens angeordnete Klemmschrauben versehen werden.

Bei einem gemeinsamen Antrieb für die über den Lagerbolzen gekoppelten Wickelwellen läßt sich die Anordnung mit Vorteil so treffen, daß der Lagerbolzen mit dem Einsatzstück der unmittelbar angetriebenen Wickelwelle ohne Klemmverbindung drehfest verbunden wird, während er nur mit der mittelbar angetriebenen Wikkelwelle über die genannte Klemmverbindung gekoppelt wird.

Andererseits kann die erfindungsgemäße Kupplungsvorrichtung aber auch dann mit Vorteil verwendet werden, wenn die über den Lagerbolzen gekoppelten Wickelwellen von ihren einander abgewandten Wellenenden her jeweils von einem eigenen Antriebsmotor angetrieben werden. In diesem Fall ist die drehfeste Kupplung der Wickelwellen an ihren einander zugewandten Enden durch Lösen der genannten Klemmverbindung aufgehoben. Die erfindungsgemäße Kupplungsvorrichtung ist demgemäß vielseitig bei Einzel- oder auch Mehrfachantrieb der Wickel- bzw. Tuchwellen von Markisen u.dgl. einsetzbar.

Nach einem weiteren erfindungswesentlichen Gestaltungsmerkmal ist der Lagerbolzen in der Plattenöffnung der Zwischenplatte (Tragkonsole) in einem Bolzenlager gelagert, das vorzugsweise aus einer einfachen Lagerbuchse besteht. Dies führt zu einer besonders einfachen und raumsparenden Gestaltung der Bolzenverlagerung. Ferner empfiehlt es sich, das die Klemmverbindung aufweisende Einsatzstück über ein Lagerelement, vorzugsweise eine einfache Lagerbuchse, auf dem Lagerbolzen zu lagern, das nur bei gelöster Klemmverbindung eine Lagerfunktion hat.

Zur Erleichterung der Montage und Demontage der Wickelwellen wird zweckmäßig die vom Lagerbolzen durchgriffene Plattenöffnung der Zwischenplatte mit zu ihren Außenseiten schräg verlaufenden Montage- und Demontageflächen versehen, mit deren Hilfe es möglich ist, die Wickelwellen, wie an sich bekannt, auch unter Schräglage ein- und auszubauen. Aus dem gleichen Grund wird auch das die Klemmverbindung aufweisende Einsatzstück an seiner Stirnscheibe mit einer vom Lagerbolzen durchgriffenen Durchgriffsöffnung versehen, die mit einer schräg nach außen verlaufenden Montage- und Demontagefläche ausgeführt ist.

Weitere vorteilhafte Gestaltungsmerkmale der Erfindung sind in den einzelnen Ansprüchen angegeben.

Die Erfindung wird nachfolgend im Zusammenhang mit dem in der Zeichnung gezeigten Ausführungsbeispiel näher erläutert. In der Zeichnung zeigen:
- Fig. 1: in einem axialen Teilschnitt eine erfindungsgemäße Kopplung zweier Wickelwellen einer Markise od.dgl. entsprechend der Schnittlinie I-I der Fig. 2;
- Fig. 2: einen Querschnitt nach Linie II-II der Fig. 1.

Zum Verständnis der Erfindung wird Bezug genommen auf den eingangs angegebenen einschlägigen Stand der Technik, aus dem sich auch der grundsätzliche Gesamtaufbau der Anlage ergibt.

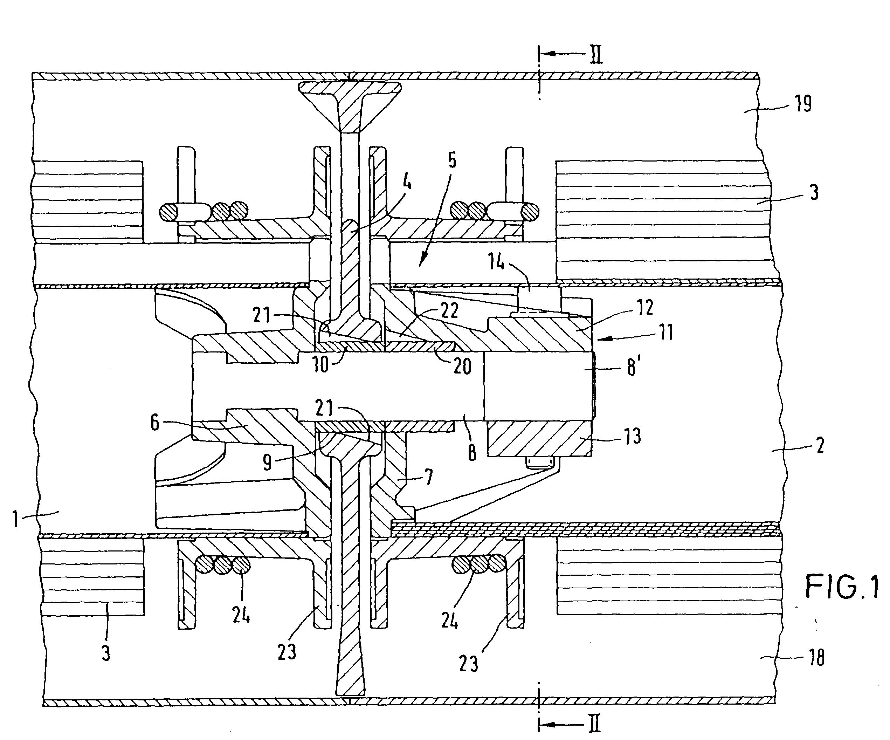

Fig. 1 zeigt zwei rohrförmige Wickelwellen 1 und 2 im Bereich ihrer einander zugewandten Enden mit den auf den Wickelwellen aufgewickelten Markisentüchern 3. Die Wickelwellen 1 und 2 sind, wie bekannt, an festen Tragkonsolen bzw. Zwischenplatten eines Gehäusekastens gelagert. Fig. 1 zeigt eine einzelne Tragkonsole in Gestalt einer zwischen den fluchtenden Wickelwellen 1 und 2 angeordneten Zwischenplatte 4. Es versteht sich, daß die Gesamtanlage auch mehr als zwei auf gemeinsamer Fluchtlinie liegende angetriebene Wickelwellen, auch als Tuchwellen bezeichnet, aufweisen kann.

Es sei angenommen, daß die in Fig. 1 links im Bild gezeigte Wickelwelle 1 an ihrem nicht dargestellten linken Ende von einem elektrischen Antriebsmotor angetrieben wird und daß die Wickelwelle 2 über eine Kupplungsvorrichtung 5 von der Wickelwelle 1 angetrieben wird. Die rohrförmigen Wickelwellen 1 und 2 weisen an ihren beiden Enden jeweils drehfest mit ihnen verbundene Einsatzstücke 6 und 7 auf, mit denen sie an der Tragkonstruktion abgestützt und gelagert werden. Fig. 1 zeigt die Gestaltung der Einsatzstücke 6 und 7 im Bereich der Kupplungsvorrichtung 5. Die Einsatzstücke können aus Leichtmetall od.dgl. bestehen und sind, wie erwähnt, fest mit den Wickelwellen verbunden. Die Kopplung der beiden Wickelwellen 1 und 2 erfolgt über einen axialen Lagerbolzen 8, der im gezeigten Ausführungsbeispiel mit dem Einsatzstück 6 der Wickelwelle 1 fest und unlösbar verbunden ist. Dies kann in unterschiedlicher Weise geschehen, z.B. dadurch, daß er, wie in Fig. 1 erkennbar, eine Mittenbohrung des Einsatzstücks 6 durchfaßt und in dieser Mittenbohrung z.B. durch Formschluß, durch eine Preßverbindung oder in sonstiger Weise festgelegt wird. Der die Drehachse der beiden Wickelwellen 1 und 2 bildende Lagerbolzen 8 durchfaßt eine Plattenöffnung 9 der Zwischenplatte 4 und ist in der Plattenöffnung 9 in einem aus einer Lagerbuchse 10 bestehenden Bolzenlager drehbar gelagert. Wie Fig. 1 zeigt, ist die Zwischenplatte 4 im Bereich der vom Lagerbolzen 8 durchgriffenen Plattenöffnung 9 in ihrer Plattendicke verstärkt ausgeführt.

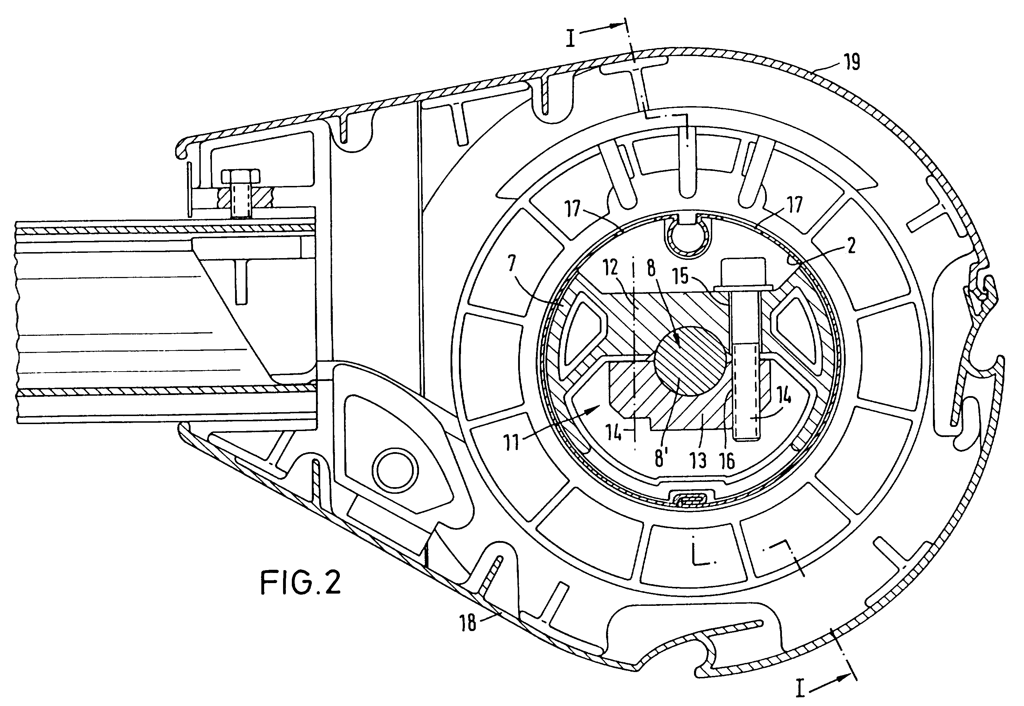

Das von dem zylindrischen Lagerbolzen 8 durchgriffene Einsatzstück 7 der Wickelwelle 2 weist zur drehfesten Kupplung dieser Wickelwelle mit dem Lagerbolzen 8 eine diesen umgreifende Klemmverbindung 11 auf, die in bevorzugter Ausführung aus einer mehrteiligen Schalen-Klemmverbindung besteht und in der gezeigten Ausführungsform von zwei Lagerhalbschalen 12 und 13 gebildet wird, zwischen denen das in der Wickelwelle 2 liegende zylindrische Ende 8' des Lagerbolzens 8 fest einspannbar ist, wie dies vor allem auch Fig. 2 zeigt. Die eine Lagerhalbschale 12 ist einstückig und fest mit dem Einsatzstück 7 verbunden, während die andere Lagerhalbschale 13 mittels Klemmorgane in Gestalt von Klemmschrauben 14 zur Einspannung des Lagerbolzens verstellbar ist. Die beiden Lagerhalbschalen 12 und 13 weisen jeweils angenähert halbkreisförmige Lagerausnehmungen für den Lagerbolzen 8 auf. Sie sind zu beiden Seiten des Lagerbolzens 8 mit fluchtenden Bohrungen 15 und 16 versehen, wobei die Bohrungen 16 der Lagerhalbschale 13 als Gewindebohrungen ausgeführt sind, in die die Klemmschrauben 14 eingeschraubt sind. In Fig. 2 ist die eine der beiden Klemmschrauben 14 lediglich durch eine strichpunktierte Linie gezeigt. Durch Festdrehen der Klemmschrauben 14 läßt sich eine feste Klemmverbindung, also eine zuverlässige drehfeste Verbindung der Wickelwelle 2 mit dem Lagerbolzen 8 erreichen. Zur Verbesserung der drehfesten Verbindung kann der Lagerbolzen 8 an seinem zwischen den beiden Lagerhalbschalen 12 und 13 einspannbaren zylindrischen Bolzenende 8' mit einer leichten Aufrauhung, Rändelung od.dgl. versehen sein.

Die Wickelwelle 2 weist an ihrem Mantel im Bereich der Klemmkupplung 11 Manteldurchbrechungen 17 (Fig. 2) auf, durch die von außen ein Schlüssel in die Wickelwelle eingeführt werden kann, mit dessen Hilfe die Klemmschrauben 14 betätigt werden. Die Wickelwellen befinden sich im übrigen in einem Gehäusekasten 18, der mit einem lösbaren Deckel 19 versehen ist. Bei entferntem Deckel 19 oder ohne Deckelentfernung bei entsprechender Drehstellung der Wickelwelle 2 liegen die Manteldurchbrechungen 17 nach außen frei, so daß die innenliegende Klemmverbindung 11 von außen her hergestellt oder auch gelöst werden kann.

Wie Fig. 1 zeigt, ist die Wickelwelle 2 mit ihrem Einsatzstück 7 auf einer Lagerbuchse 20 gelagert, die in der zentralen Innenöffnung der am.Umfang mit dem Mantel der Wickelwelle 2 verbundenen Stirnscheibe des Einsatzstücks 7 angeordnet ist.

Um eine Nachjustierung der Wickelwellen in ihrer Drehrichtung und damit eine Kantenausrichtung der Markisentücher durchzuführen, wird die Klemmverbindung 11 durch Lösen der Klemmschrauben 14 geöffnet und die Wickelwelle 1 mit Hilfe des obengenannten Motors oder von Hand gegenüber der stehenden Wickelwelle 2 in der einen oder anderen Richtung gedreht. Es ist ersichtlich, daß auf diese Weise eine stufenlose Verstellung der Wickelwellen bzw. ihrer Markisen auch unter Spannung derselben möglich ist. Nach erfolgter Justierung wird die Klemmverbindung 11 durch Festdrehen der Klemmschrauben 14 hergestellt, so daß eine drehfeste Kupplung der Wickelwellen 1 und 2 gegeben ist und beide Wickelwellen gemeinsam angetrieben werden können.

Die vorstehend beschriebene Anordnung läßt sich aber auch dann verwenden, wenn für jede der beiden Wickelwellen 1 und 2 ein gesonderter Drehantrieb vorgesehen ist. Hierbei können die beiden Wickelwellen 1 und 2 an ihren einander abgewandten (in der Zeichnung nicht gezeigten) Wellenenden jeweils über einen eigenen Antriebsmotor unmittelbar oder mittelbar über eine sich anschließende weitere angetriebene Wickelwelle angetrieben werden, wobei aber die Kupplungsvorrichtung 5 mit der Klemmverbindung 11 durch Lösen der Klemmschrauben 14 geöffnet ist. Die Wickelwellen 1 und 2 sind in diesem Fall am bzw. auf dem Lagerbolzen 8 gegeneinander freidrehbar gelagert.

Fig. 1 zeigt, daß die vom Lagerbolzen 8 durchgriffene Plattenöffnung 9 mit Montage- und Demontageflächen 21 versehen ist, die von der zylindrischen Innenwandung der Plattenöffnung 9 ausgehend spitzwinklig schräg zu den beiden gegenüberliegenden Seiten der Zwischenplatte 4 hin verlaufen, so daß der Lagerbolzen 8 mit der lose in der Plattenöffnung 9 angeordneten und sich an den zylindrischen Wandungsteilen der Plattenöffnung abstützenden Lagerbuchse 10 in die Neigung dieser Montage- und Demontageflächen 21 gebracht werden kann. Dies ermöglicht es, bei der Montage oder Demontage der Wickelwellen diese entsprechend der Neigung der Montage-und Demontageflächen 21 schrägzustellen, wodurch der Ein- und Ausbau der Wickelwellen erleichtert wird. Bei der Montage kann z.B. die Wickelwelle 1 mit dem an ihrem Einsatzstück 6 fest angeordneten Lagerbolzen 8 in Schräglage angesetzt werden, wobei der Lagerbolzen 8 in Schräglage durch die Plattenöffnung 9 geschoben wird. Das Einsatzstück 7 am anderen Wickelrohr 2 ist an seiner zentralen Öffnung mit einer entsprechend schräggestellten Montage- und Demontagefläche 22 versehen. Die Flächen 21 und 22 führen gemeinsam zu Erleichterungen beim Ein- und Ausbau der Wickelwellen. Die beiden Lagerbuchsen 10 und 20 sitzen mit Preßpassung in der Plattenöffnung 9 bzw. in der zentralen Öffnung des Einsatzstücks 7. Eine Axialverschiebung der Lagerbuchsen ist nicht möglich, da sich diese in Anlage zueinander sowie in Abstützung an den Einsatzstücken 6 und 7 befinden.

Insbesondere bei sogenannten Wintergartenbeschattungen und ähnlichen Einrichtungen können an den Enden der Wickelwellen, wie in Fig. 1 gezeigt, Seiltrommeln 23 für Spannseile 24 angeordnet werden, die zweckmäßig mit den Einsatzstücken 6 und 7 verbunden sind. Die Spannseile 24 dienen dabei in bekannter Weise zum Spannen der Tuchelemente oder sonstiger flexibler Abdeckelemente 3.

Die vorstehend beschriebene Kupplungsvorrichtung 5 läßt sich ersichtlich nicht nur bei Markisenanlagen mit zwei oder mehr gemeinsam oder auch einzeln antreibbaren Wickelwellen verwenden, sondern auch bei vergleichbaren Anlagen, z.B. bei Wintergartenbeschattungen usw. Auch kann die Klemmverbindung 11 abweichend von dem gezeigten bevorzugten Ausführungsbeispiel gestaltet werden, z.B. als ein den Lagerzapfen an der Einspannstelle umschließendes spannbares Spannband. Anstelle von Klemmschrauben können auch andere Klemmorgane, z.B. ein Spannkeil, verwendet werden. Die Verlagerung der Wickelwellen an ihren einander abgewandten Enden kann in unterschiedlicher Weise gestaltet werden, wobei auch hier auf Einfachheit der Montage und Demontage Rücksicht zu nehmen ist.

## Patentansprüche

1. Kupplungsvorrichtung für die Wickelwellen von Markisen (3) oder sonstigen flexiblen Abdeckelementen, mit einem die hohlen Wickelwellen (1, 2) an ihren mit festen Einsatzstücken (6, 7) versehenen benachbarten Enden koppelnden und gegen eine feste Zwischenplatte od.dgl. (4) abstützenden Lagerbolzen (8), der eine Plattenöffnung (9) der Zwischenplatte (4) durchfaßt und in dieser in einem Bolzenlager (10) gelagert ist, wobei zumindest die eine der beiden über den gemeinsamen Lagerbolzen (8) gekoppelten Wickelwellen (1, 2) an ihrem Einsatzstück (7) eine den Lagerbolzen (8) umschließende mehrteilige Klemmverbindung (11) aufweist, die mittels eines oder mehrerer Klemmorgane (14) betätigbar ist, und wobei die hohle Wickelwelle (2) mit einer oder mehreren Manteldurchbrechungen (17) für die Betätigung des oder der Klemmorgane (14) versehen ist, **dadurch gekennzeichnet, daß** die Wickelwellen (1, 2) zur Kantenausrichtung der Markisen (3) od.dgl. stufenlos gegeneinander drehbar sind, wobei der Lagerbolzen (8) an seiner Einspannstelle (8') für die Klemmverbindung (11) zylindrisch ausgeführt ist und die Klemmverbindung (11) als mehrteilige Schalen-Klemmverbindung ausgebildet ist.

2. Kupplungsvorrichtung nach Anspruch 1, **dadurch gekennzeichnet, daß** die Klemmverbindung (11) mittels einer oder mehrerer Klemmschrauben (14) betätigbar ist.

3. Kupplungsvorrichtung nach Anspruch 1 oder 2, **dadurch gekennzeichnet, daß** die Klemmverbindung (11) von zwei den Lagerbolzen (8) an seiner zylindrischen Einspannstelle (8') zwischen sich aufnehmenden und einspannenden Lagerhalbschalen (12, 13) gebildet ist.

4. Kupplungsvorrichtung nach Anspruch 3, **dadurch gekennzeichnet, daß** die eine Lagerhalbschale (12) einstückig fest mit dem Einsatzstück (7) der Wickelwelle verbunden ist.

5. Kupplungsvorrichtung nach Anspruch 4 oder 5, **dadurch gekennzeichnet, daß** die beiden Lagerhalbschalen (12, 13) mit fluchtenden Bohrungen (15, 16) für zu beiden Seiten des Lagerbolzens (8) angeordnete Klemmschrauben (14) versehen sind.

6. Kupplungsvorrichtung nach einem der Ansprüche 1 bis 5, **dadurch gekennzeichnet, daß** der Lagerbolzen (8) an seiner zylindrischen Einspannstelle (8') mit einer Aufrauhung, Rändelung od.dgl. versehen ist.

7. Kupplungsvorrichtung nach einem der Ansprüche 1 bis 6, **dadurch gekennzeichnet, daß** bei einem gemeinsamen Antrieb für die Wickelwellen (1, 2) der mit dem Einsatzstück (6) der unmittelbar angetriebenen Wickelwelle (1) drehfest verbundene Lagerbolzen (8) nur mit der mittelbar angetriebenen Wickelwelle (2) über die Klemmverbindung (11) gekoppelt ist.

8. Kupplungsvorrichtung nach einem der Ansprüche 1 bis 7, **dadurch gekennzeichnet, daß** der Lagerbolzen (8) in der Plattenöffnung (9) der Zwischenplatte (4) in einer Lagerbuchse (10) gelagert ist.

9. Kupplungsvorrichtung nach einem der Ansprüche 1 bis 8, **dadurch gekennzeichnet, daß** die über den Lagerbolzen (8) gekoppelten Wickelwellen (1, 2) über ihre einander abgewandten Wellenenden jeweils von einem eigenen Antriebsmotor angetrieben sind, wobei die drehfeste Kupplung der Wikkelwellen (1, 2) an ihren einander zugewandten Enden durch Lösen der Klemmverbindung (11) aufgehoben ist.

10. Kupplungsvorrichtung nach einem der Ansprüche 1 bis 9, **dadurch gekennzeichnet, daß** die Wickelwelle (2), deren Einsatzstück (7) die Klemmverbindung (11) aufweist, über ein Lagerelement, vorzugsweise eine Lagerbuchse (20), auf dem Lagerbolzen (8) gelagert ist.

11. Kupplungsvorrichtung nach einem der Ansprüche 1 bis 10, **dadurch gekennzeichnet, daß** die vom Lagerbolzen (8) durchgriffene Plattenöffnung (9) der Zwischenplatte (4) mit zu ihren Außenseiten schräg verlaufenden Montage- und Demontageflächen (21) versehen ist, und daß das die Klemmverbindung (11) aufweisende Einsatzstück (7) eine vom Lagerbolzen (8) durchgriffene Durchgriffsöffnung mit schräg nach außen verlaufender Montage- und Demontagefläche (22) aufweist.

## Claims

1. A coupling device for the roller shafts of awnings (3) or other flexible covering elements, having a bearing pin (8) which couples the hollow roller shafts (1, 2) at their adjacent ends which are provided with fixed insert pieces (6, 7) and which is supported against a fixed intermediate plate (4) or the like, which bearing pin passes through a plate opening (9) in the intermediate plate (4) and is mounted therein in a pin bearing (10), wherein at least one of the two roller shafts (1, 2) which are coupled via the common bearing pin (8) has a multi-part clamping joint (11) on its insert piece (7), which clamping joint surrounds the bearing pin (8) and can be actuated by means of one or more clamping elements (14), and wherein the hollow roller shaft (2) is provided with one or more casing openings (17) for the actuation of the clamping element or clamping elements (14), **characterised in that** the roller shafts (1, 2) are continuously rotatable in relation to each other for the edge alignment of the awnings (3) or the like, wherein the bearing pin (8) is of cylindrical construction at its clamping location (8') for the clamping joint (11) and the clamping joint (11) is constructed as a multi-part shell clamping joint.

2. A coupling device according to claim 1, **characterised in that** the clamping joint (11) can be actuated by means of one or more clamping screws (14).

3. A coupling device according to claim 1 or 2, **characterised in that** the clamping joint (11) is formed by two bearing half-shells (12, 13) which receive and clamp the bearing pin (8) between them at its cylindrical clamping location (8').

4. A coupling device according to claim 3, **characterised in that** one bearing half-shell (12) is fixedly joined in one piece to the insert piece (7) of the roller shaft.

5. A coupling device according to claim 4 or 5, **characterised in that** the two bearing half-shells (12, 13) are provided with aligned holes (15, 16) for clamping crews (14) disposed on both sides of the bearing pin (8).

6. A coupling device according to any one of claims 1 to 5, **characterised in that** the bearing pin (8) is provided with surface roughening or knurling or the like at its cylindrical clamping location (8').

7. A coupling device according to any one of claims 1 to 6, **characterised in that** when there is a common drive for the roller shafts (1, 2), the bearing pin (8) which is attached fixed in rotation to the insert piece (6) of the directly driven roller shaft (1) is only coupled to the indirectly driven roller shaft (2) via the clamping joint (11).

8. A coupling device according to any one of claims 1 to 7, **characterised in that** the bearing pin (8) is mounted in a bearing bush (10) in the plate opening (9) of the intermediate plate (4).

9. A coupling device according to any one of claims 1 to 8, **characterised in that** the roller shafts (1, 2) which are coupled via the bearing pin (8) are each driven by a separate drive motor via their shaft ends which are remote from each other, wherein the fixed rotary coupling of the roller shafts (1, 2) at their mutually facing ends is disengaged by releasing the clamping joint (11).

10. A coupling device according to any one of claims 1 to 9, **characterised in that** the roller shaft (2), the insert piece (7) of which comprises the clamping joint (11), is mounted on the bearing pin (8) via a bearing element, preferably a bearing bush (20).

11. A coupling device according to any one of claims 1 to 10, **characterised in that** the plate opening (9) in the intermediate plate (4), through which the bearing pin (8) passes, is provided with installation and removal faces (21) running obliquely towards its external faces, and that the insert piece (7) which comprises the clamping joint (11) has a passageway opening through which the bearing pin (8) passes and which has an installation and removal face (22) running obliquely outwards.

## Revendications

1. Dispositif d'accouplement destiné aux barres d'enroulement de stores (3) ou d'autres éléments de recouvrement flexibles, comportant un axe (8) accouplant les barres d'enroulement (1, 2) creuses, au niveau de leurs extrémités adjacentes pourvues d'inserts (6, 7) fixes, et s'appuyant contre une plaque intermédiaire ou similaire (4) fixe, axe qui pénètre dans une ouverture (9) de la plaque intermédiaire (4) et est monté, dans celle-ci, dans un palier d'axe (10), au moins l'une des deux barres d'enroulement (1, 2) accouplées par l'axe commun (8) présentant, sur son insert (7), un accouplement par serrage (11) en plusieurs parties entourant l'axe (8), qui est susceptible d'être actionné au moyen d'un ou de plusieurs organes de serrage (14), et la barre d'enroulement (2) creuse étant pourvue d'un ou plusieurs perçages d'enveloppe (17) pour l'actionnement de l'organe ou des organes de serrage (14), caractérisé en ce que les barres d'enroulement (1, 2), pour orienter les bords des stores (3) ou similaires peuvent être amenées à tourner l'une par rapport à l'autre continûment, l'axe (8), au niveau de son point d'encastrement (8') pour l'accouplement par serrage (11) présentant une forme cylindrique et l'accouplement par serrage (11) étant conformé en accouplement par serrage en plusieurs parties formant coques.

2. Dispositif d'accouplement selon la revendication 1, caractérisé en ce que l'accouplement par serrage (11) est susceptible d'être actionné par une ou plusieurs vis de serrage (14).

3. Dispositif d'accouplement selon la revendication 1 ou 2, caractérisé en ce que l'accouplement par serrage (11) est constitué de deux demi-coques formant paliers (12, 13) recevant entre elles et serrant l'axe (8), au niveau de son point d'encastrement (8') cylindrique.

4. Dispositif d'accouplement selon la revendication 3, caractérisé en ce que l'une des demi-coques formant palier (12) est reliée fixement avec l'insert (7) de la barre d'enroulement, pour ne former qu'une seule pièce avec lui.

5. Dispositif d'accouplement selon la revendication 4 ou 5, caractérisé en ce que les deux demi-coques (12, 13) sont pourvues de perçages (15, 16) alignés, destinés à des vis de serrage (14) placées de part et d'autre de l'axe (8).

6. Dispositif d'accouplement selon l'une des revendications 1 à 5, caractérisé en ce que l'axe (8), au niveau de son point d'encastrement (8') cylindrique, est rendu rugueux, est pourvu d'un moletage ou similaire.

7. Dispositif d'accouplement selon l'une des revendications 1 à 6, caractérisé en ce que, lorsque les barres d'enroulement (1, 2) sont entraînées conjointement, l'axe (8) relié de façon fixe avec l'insert (6) de la barre d'enroulement (1) entraînée de façon directe, n'est accouplé qu'avec la barre d'enroulement (2) entraînée de façon indirecte, par l'intermédiaire de l'accouplement par serrage (11).

8. Dispositif d'accouplement selon l'une des revendications 1 à 7, caractérisé en ce que l'axe (8) présent dans l'ouverture (9) de la plaque intermédiaire (4) est monté dans une douille palier (10).

9. Dispositif d'accouplement selon l'une des revendications 1 à 8, caractérisé en ce que les barres d'enroulement (1, 2) accouplées par l'axe (8) sont chacune entraînées, par leurs extrémités opposées l'une à l'autre, par un moteur d'entraînement qui leur est propre, l'accouplement solidaire en rotation des barres d'enroulement (1, 2) au niveau de leurs extrémités opposées l'une à l'autre étant supprimé par dégagement de l'accouplement par serrage (11).

10. Dispositif d'accouplement selon l'une des revendications 1 à 9, caractérisé en ce que la barre d'enroulement (2), dont l'insert (7) présente l'accouplement par serrage (11), est montée sur l'axe (8) par l'intermédiaire d'un élément formant palier, de préférence une douille palier (20).

11. Dispositif d'accouplement selon l'une des revendications 1 à 10, caractérisé en ce que l'ouverture (9) de la plaque intermédiaire (4) qui est pénétrée par l'axe (8) est pourvue de surfaces de montage et de démontage (21) obliques par rapport à ses faces extérieures, et en ce que l'insert (7) présentant l'accouplement par serrage (11) présente une ouverture de pénétration pénétrée par l'axe (8), avec des surfaces de montage et de démontage s'étendant en oblique vers l'extérieur.
